# EUROPÄISCHE PATENTANMELDUNG

(11) **EP 3 567 532 A1**
(43) Veröffentlichungstag der Anmeldung: **13.11.2019**
(21) Anmeldenummer: 18171254.8
(22) Anmeldetag: 08.05.2018
(51) Int. Cl.: G06Q 10/08, G06F 21/64, H04L 9/32

(54) **INTEGRITÄTSPRÜFUNG VON DATEN ZUMINDEST EINER TECHNISCHEN ANLAGE**

(71) Anmelder: Siemens Aktiengesellschaft, 80333 München (DE)
(72) Erfinder: Biedner, Simeon, 76135 Karlsruhe (DE); Klotz, Dominik, 76185 Karlsruhe (DE)

(57) **Zusammenfassung**

Die Erfindung betrifft ein Verfahren zur Integritätsprüfung von Daten zumindest einer technischen Anlage, ein entsprechendes Computerprogrammprodukt, ein Leitsystem, eine technische Anlage und eine Cloud-Plattform. Erfindungsgemäß wird ein Datensatz gebildet, der Daten mindestens einer technischen Anlage enthält und diesem mindestens ein Identifikationsmerkmal zugeordnet. Anschließend wird über den Datensatz ein Hashwert gebildet und dieser zusammen mit dem Identifikationsmerkmal in eine verteilte Datenbank, welche gemäß dem Blockchain-Prinzip ausgeführt ist, übertragen und in dieser in einer Transaktion abgespeichert. Durch ein Blockchain-Protokoll wird somit der Eintrag in allen Knoten der verteilten Datenbank veröffentlicht. Die Integrität der Daten einer technischen Anlage kann nun überprüft werden, indem für ein Identifikationsmerkmal der Hashwert des Datensatzes aus der Datenbank der technischen Anlage mit dem Hashwert der verteilten Datenbank verglichen wird. Auf diese Weise wird eine signifikante Rechenleistungsreduzierung der Datenintegritätsprüfung für dezentrale Datenhaltungen erreicht.

## Beschreibung

Die Erfindung betrifft ein Verfahren zur Integritätsprüfung von Daten zumindest einer technischen Anlage gemäß dem Oberbegriff des Patentanspruchs 1. Die Erfindung betrifft ferner ein entsprechendes Computerprogrammprodukt, ein Leitsystem, eine technische Anlage und eine Cloud-Plattform.

In allen informationsverarbeitenden und -lagernden technischen Systemen spielt die Informationssicherheit eine wichtige Rolle. Dies bedeutet, dass die Vertraulichkeit und Integrität von Daten oder Datensätzen gewährleistet sein muss. Änderungen der Daten müssen kontrollierbar und erkennbar sein. Daten müssen vor Manipulationen geschützt werden, um Gefahren und Schäden jeglicher Art abzuwenden.

Auch in der Prozessindustrie, wie beispielsweise in der chemischen, pharmazeutischen, petrochemischen und der Nahrungs- und Genussmittelindustrie, in der Produktionsindustrie oder im Bereich der Energieerzeugung steigen die Anforderungen an die Datenintegrität und die Änderungskontrolle von prozess- oder produktionsrelevanten Daten, die in großen Mengen in den technischen Anlagen anfallen, da viele dieser Daten immer häufiger genutzt werden, um Analysen des zugrundliegenden Prozesses durchzuführen, um Prozessergebnisse oder Produkte zu verbessern oder um eine Optimierung durchzuführen. Manipulationen historischer Daten, können jedoch zu falschen Analyseergebnissen führen und erheblichen Schaden mit unkontrollierbaren Auswirkungen anrichten bis hin zum Produktionsausfall oder Anlagenstillstand.

Die Analyse von prozess- oder produktionsrelevanten Daten wird meist in Rechenzentren durchgeführt. Hierzu werden zunehmend externe Rechenzentren und Cloud-Dienste mit den entsprechenden Infrastrukturen außerhalb der technischen Anlagen genutzt. Hierfür müssen die Daten von der technischen Anlage zu einem Rechenzentrum oder externen Server transferiert werden. Dabei kann es absichtlich oder unabsichtlich zu Manipulationen kommen, die die prozess- oder produktionsrelevanten Daten verfälschen.

Technische Maßnahmen zur Sicherstellung von Datenintegrität zielen daher zumeist darauf ab, bei der elektronischen Datenübertragung fehlerhafte Daten als solche erkennen zu können und ggf. eine erneute Datenübertragung durchzuführen. Eine Möglichkeit der technischen Umsetzung zum Schutz vor Übertragungsfehlern ist die Bildung von Prüfsummen, womit die Integrität von Daten überprüft werden kann. Obwohl eine herkömmliche Prüfsumme nützlich ist, um vor unbeabsichtigten Änderungen zu schützen, bietet sie keine Sicherheit gegenüber beabsichtigten Datenänderungen (Manipulationen). Es ist deshalb oft notwendig, anstelle eines einfachen Prüfsummenverfahrens kryptografisch stärkere Algorithmen, wie Hash-Funktionen zu verwenden.

Eine Hashfunktion (auch Streuwertfunktion) ist eine Abbildung, die eine große Eingabemenge (die Schlüssel) auf eine kleinere Zielmenge (die Hashwerte) abbildet. Eine "gute" Hashfunktion liefert dabei für die Eingabedaten Werte so, dass zwei unterschiedliche Eingaben auch zu unterschiedlichen Ausgabewerten führen.

Hashfunktionen werden daher genutzt, um einen Datensatz eindeutig zu identifizieren. Ein Hashwert wird deshalb auch als "Fingerabdruck" bezeichnet, da er eine nahezu eindeutige Kennzeichnung einer größeren Datenmenge darstellt. Sobald die Hashfunktion jedoch bekannt ist, kann ein Dritter bei Übertragung der Daten den Hashwert und auch den Datensatz austauschen. Dies führt dazu, dass der Empfänger nicht verifizieren kann, ob die Daten manipuliert wurden. Es besteht demnach ein Bedarf nach weitreichenderen Verfahren, um eine Datenintegrität - vor allem im Zusammenhang mit Cloud-Anwendungen - sicherzustellen.

Es ist daher die Aufgabe der vorliegenden Erfindung, ein einfaches und effizientes Verfahren zur Prüfung der Datenintegrität insbesondere von prozess- oder produktionsrelevanten Daten in dezentraler Datenhaltung anzugeben. Es ist ferner die Aufgabe der vorliegenden Erfindung, ein Computerprogrammprodukt anzugeben, welches die Durchführung eines solchen Verfahrens erlaubt. Auch soll ein Leitsystem, eine technische Anlage und eine Plattform angegeben werden, in denen ein solches Verfahren anwendbar ist.

Die Aufgabe wird hinsichtlich des Verfahrensaspekts durch die Merkmale des unabhängigen Patentanspruchs 1 gelöst.

Erfindungsgemäß wird ein Datensatz gebildet, der Daten mindestens einer technischen Anlage enthält und diesem mindestens ein Identifikationsmerkmal zugeordnet. Anschließend wird über den Datensatz ein Hashwert gebildet und dieser zusammen mit dem Identifikationsmerkmal in eine verteilte Datenbank, welche gemäß dem Blockchain-Prinzip ausgeführt ist, übertragen und in dieser in einer Transaktion abgespeichert. Durch ein Blockchain-Protokoll wird somit der Eintrag an alle Knoten der verteilten Datenbank verteilt und veröffentlicht. Die Integrität der Daten einer technischen Anlage kann nun überprüft werden, indem für ein Identifikationsmerkmal der Hashwert des Datensatzes aus der Datenbank der technischen Anlage mit dem Hashwert der verteilten Datenbank verglichen wird.

Das vorgeschlagene Verfahren bietet zahlreiche Vorteile: Neben der Unveränderbarkeit der Daten aufgrund der Blockchain-Technologie wird durch das erfindungsgemäße Verfahren eine enorme Reduzierung der Rechenleistung im Peer-to-Peer-Netzwerk der Bockchain-Datenbank erreicht, weil nicht der gesamte Datensatz als Transaktion in die verteilte Blockchain-Datenbank geschrieben werden muss, sondern nur der Hashwert. Neben der Hashfunktion, welche im Grunde genommen ja bereits ein eigenes Identifikationsmerkmal darstellt, wird vorteilhaft noch ein weiteres Identifikationsmerkmal zum Datensatz hinzugefügt, welches im Anschluss explizit für die Prüfung der Datenintegrität verwendbar ist. Ferner ist eine Verschlüsselung der Rohdaten einer technischen Anlage nicht erforderlich, wodurch eine effizientere Weiterverarbeitung der Daten ermöglicht wird. In erster Linie erlaubt das erfindungsgemäße Verfahren jedoch eine sichere Validierung von anfallenden Prozess- oder Produktionsdaten zur Weiterverarbeitung in Rechenzentren. Ein weiterer Vorteil besteht darin, dass die Integrität der Daten jederzeit und auch wiederholt nachgewiesen werden kann.

Die Integritätsprüfung von Daten kann vorteilhaft sowohl dezentral als auch zentral erfolgen. Eine dezentrale Prüfung bedeutet hier, dass an jedem Knoten der verteilten Blockchain-Datenbank der Hashwert des Datensatzes gegen den Hashwert in der Transaktion geprüft werden kann. Die dezentrale Eigenschaft der Blockchain-Technologie erlaubt somit, dass eine Prüfung von Anlagendaten auch außerhalb der technischen Anlage z.B. bei einer Behörde stattfinden kann. Auch ist die Datenprüfung einer ersten Anlage auf einer zweiten Anlage möglich. Eine zentrale Prüfung kann erfolgen, wenn inhaltliche Kopien von zumindest Teilen einer Datenbank einer technischen Anlage zu einer zentralen Datenbank eines zentralen Netzwerks wie beispielsweise einer Cloud übertragen werden und anschließend die Überprüfung der Datensätze durch Vergleich der Hashwerte aus der zentralen Datenbank und der verteilten Blockchain-Datenbank erfolgt. Diese Weiterbildung ist insbesondere für Unternehmen, die eine Anlagenflotte betreiben, von Interesse, weil auf diese Weise in einer zentralen Datenhaltung des Unternehmens Kopien der einzelnen Datenbanken oder von Teilen der Anlagen des Flottenverbunds verwaltet werden können und die Datenintegritätsprüfung in diesem Falle zentral erfolgt.

Ist die zentrale Datenbank Teil einer Cloud-Plattform, so ergibt sich der Vorteil, dass die Datenintegritätsprüfung als Dienst (Software as a Service) angeboten werden kann.

Das erfindungsgemäße Verfahren erweist sich als besonders vorteilhaft für Anlagen der Prozessindustrie oder der Produktionsindustrie mit den entsprechenden Datensätzen, weil in diesen Industrien häufig sensible und vertrauliche Daten anfallen, deren Inhalt nicht von unbefugten Einrichtungen und/oder Benutzern gelesen werden soll.

In einer vorteilhaften Weiterbildung der Erfindung werden Prozesswerte oder Produktionsdaten mit Metadaten verknüpft. Dies erlaubt unter anderem eine einfache Erweiterung bereits bestehender Systeme.

In einer weiteren vorteilhaften Weiterbildung der Erfindung wird die Integrität der Daten in einer Applikation angezeigt, wodurch eine schnellere Integritätsprüfung der Daten erfolgen kann.

Weiterhin wird ein Computerprogrammprodukt vorgeschlagen, welches auf einer programmgesteuerten Einrichtung wie beispielsweise einem Leitsystem einer technischen Anlage die Durchführung des oben erläuterten Verfahrens erlaubt.

Ein Computerprogrammprodukt, wie z.B. ein Computerprogramm-Mittel, kann beispielsweise als Speichermedium, wie z.B. als Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die Aufgabe wird zudem durch ein Leitsystem und eine technische Anlage gelöst, welche Mittel aufweisen, das erfindungsgemäße Verfahren durchzuführen. Ferner wird die Aufgabe durch eine Cloud-Plattform gelöst, welche eine zentrale Datenbank umfasst, und mit einer verteilten Datenbank verbindbar ist, und derart ausgelegt ist, das erfindungsgemäße Verfahren zur Integritätsprüfung von Daten zumindest einer technischen Anlage durchzuführen.

Im Folgenden wird die Erfindung anhand der in den Figuren dargestellten Ausführungsbeispiele näher beschrieben und erläutert.

Darin zeigen schematisch:
Fig. 1 ein Ausführungsbeispiel einer Anlageninfrastruktur zur Erläuterung des erfindungsgemäßen Verfahrens
Fig. 2 ein Flussdiagramm zur Durchführung einer Ausführung des erfindungsgemäßen Verfahrens

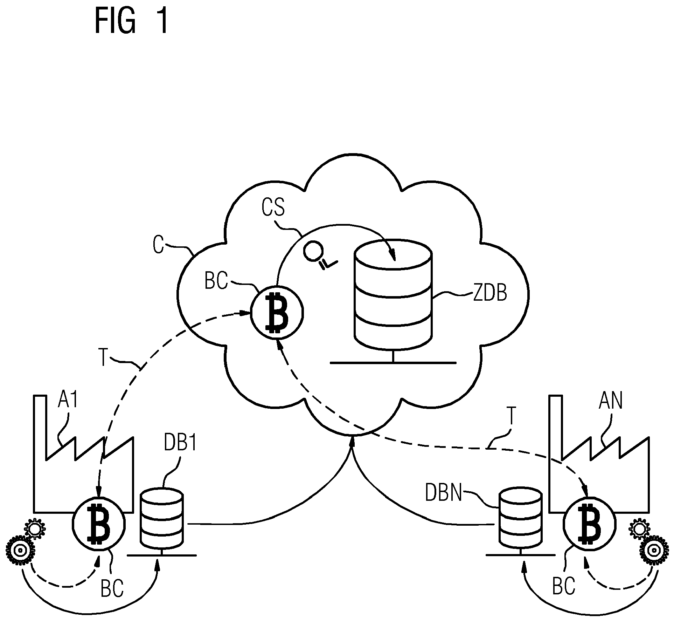

Die Erfindung wird anhand eines Beispiels aus der Prozessindustrie illustriert, ist aber auch für alle anderen industriellen Branchen anwendbar. Gemäß dem in Fig. 1 dargestellten Szenario umfasst ein Unternehmen eine Anzahl N technischer Anlagen Ai mit i = 1, ... N, z.B. im Flottenverbund. Dabei kann es sich um Anlagen aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Diese Anlagen Ai verfügen jeweils über ein Leitsystem oder zumindest ein computerunterstütztes Modul zur Steuerung und Regelung des ablaufenden Prozesses oder der Produktion. Teil des Leitsystems oder Steuerungsmoduls oder einer technischen Anlage Ai ist zumindest eine Datenbank DBi oder ein Archiv, in dem historische Daten abgespeichert sind. In dem dargestellten Szenario ist jede Anlage Ai mit einem zentralen Datenspeicher DBZ außerhalb der Unternehmensinfrastruktur verbunden. Der zentrale Datenspeicher ist hier Teil einer Rechnernetzwerks mit onlinebasierten Speicher- und Serverdiensten, welches üblicherweise auch als Cloud C (engl. Wolke) oder Cloud-Plattform bezeichnet wird und in der Figur als Wolke angedeutet ist. Die in der Cloud C gespeicherten Daten sind online zugänglich, sodass auch die Anlage AN über das Internet Zugriff auf ein zentrales Datenarchiv in der Cloud C hat.

Werden beispielsweise Anlagendaten, Gerätedaten oder Prozessdaten wie Temperaturen, Drücke oder Enthalpien in die Cloud C hochgeladen, muss sichergestellt werden, dass es zu keinen Manipulationen der Daten kommt. Hierzu wird erfindungsgemäß die Blockchain-Technologie eingesetzt. Die Blockchain-Technologie ist unter anderem aus https://de.wikipedia.org/wiki/Blockchain hinlänglich bekannt. Letztendlich entspricht Blockchain einer verteilten öffentlichen Datenbank bestehend aus einer Vielzahl von Knotenpunkten BC und ist wie ein gemeinsam genutztes, nicht veränderbares, öffentliches Register (dem so genannten Ledger) für die Aufzeichnung des Verlaufs von Transaktionen zu verstehen. Als Transaktion wird in der Informatik eine Folge von Programmschritten bezeichnet, die als eine logische Einheit betrachtet werden, weil sie den Datenbestand nach fehlerfreier und vollständiger Ausführung in einem konsistenten Zustand hinterlassen. Eine Transaktion T im Sinne der Erfindung ist die Eintragung des Identifikationsmerkmals Id und des Hashwerts H(Ch) des Datensatzes in die verteilte Blockchain-Datenbank mit den Knoten BC. Durch ein Blockchain-Protokoll wird somit der Eintrag an alle Knoten BC der verteilten Datenbank verteilt und veröffentlicht.

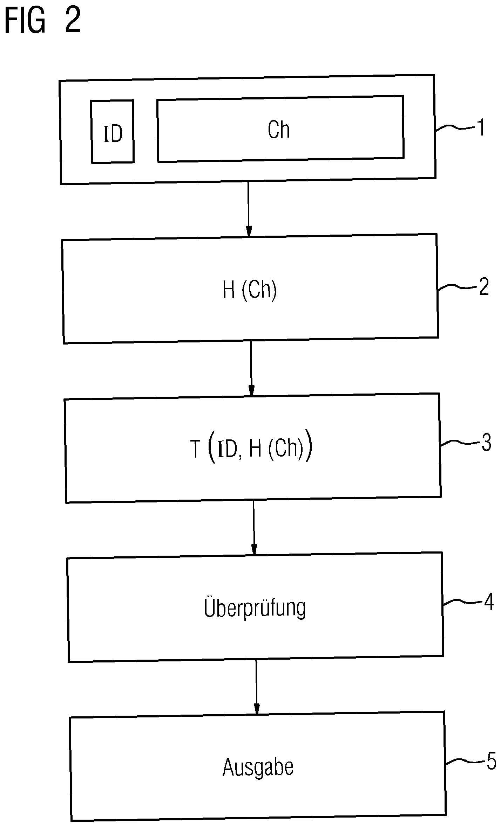

In Figur 2 ist eine Ausführungsvariante des erfindungsgemäßen Verfahrens in Form eines Flussdiagramms dargestellt. Das Verfahren ist hier für den Fall beschrieben, dass eine technische Anlage über eine Datenbank verfügt. Denkbar ist natürlich auch der Fall, dass pro Anlage mehrere Datenbanken vorhanden sind, oder dass das Verfahren in einem Flottenverband eines Unternehmens durchgeführt wird, dem eine Vielzahl technischer Anlagen angehört.

In Schritt 1 wird aus den Daten einer Datenbank DB1 der technischen Anlage A1 ein Datensatz Ch gebildet. Dieser Datensatz kann beispielsweise einen Messwert umfassen, der zur Zeit t1 mit dem Sensor S1 an der Stelle x1 gemessen wurde. All diese Daten werden in einem Datensatz Ch zusammengefasst z.B. in der Form Ch = 12018-05-01, 17:53, S1, xl,56781. Grundsätzlich kann der Datensatz mit jeglichen Meta-Daten verknüpft werden, z.B. mit weiteren Daten und/oder Informationen der technischen Anlage. Der Datensatz Ch = |2018-05-01, 17:53 , S1 , x1 ,167| enthält demnach ein Datum, eine Uhrzeit als Zeitstempel, den Namen oder die Nummer des Sensors S1 (z.B. Temperatursensor S1), eine Ortsangabe x1 und den eigentlichen Messwert (hier 167°). Ein solcher Datensatz könnte typischerweise als Prozesswert (= Temperatur 167°) mit entsprechenden Metadaten in einer chemischen Anlage auftreten (z.B. "kritischer Temperaturbereich bezogen auf das Material X").

Der Datensatz kann jegliche Daten umfassen, die in einer technischen Anlage der oben beschriebenen Art anfallen können. Neben Steuerdaten und/oder erfassten Sensordaten können auch Wartungsdaten, Gerätedaten, Kundendaten oder sicherheitsrelevante Daten umfasst sein. Weiterhin handelt es sich bei dem Datensatz insbesondere um einen sensiblen, integritätsrelevanten Datensatz, dessen Inhalt nicht von unbefugten Einrichtungen und/oder Benutzern verändert werden soll.

Diesem Datensatz Ch wird anschließend ein eindeutiges Identifikationsmerkmal Id zugeordnet. Dabei kann es sich um eine Nummer oder ein beliebiges Zeichen oder eine Kombination aus beidem handeln. In Schritt 2 wird durch Anwendung einer Hashfunktion auf den Datensatz Ch ein Hashwert H(Ch) gebildet. Es kann eine beliebige Hashfunktion H(Ch) angewendet werden. Im Grunde genommen wird bereits durch die Anwendung der Hashfunktion auf den Datensatz ein erster "Fingerabdruck" des Datensatzes zur Identifikation erreicht. Allerdings könnte der Hashwert von Dritten ausgetauscht werden. Um vor Manipulationen zu schützen, wird in Schritt 3 das Identifikationsmerkmal Id zusammen mit dem Hashwert des Datensatzes H(Ch) in einer Transaktion T in einer Blockchain-Datenbank gespeichert und durch ein Blockchain-Protokoll an alle Knotenpunkte BC der Datenbank verteilt und veröffentlicht. Eine Blockchain-Datenbank wird typischerweise wie ein Peer-to-Peer-Netzwerk verwaltet, das kollektiv einem Protokoll für die Kommunikation zwischen den Knotenpunkten folgt und neue Blöcke validiert. Sobald die Daten aufgezeichnet sind, können sie in irgendeinem gegebenen Block nicht rückwirkend ohne die Änderung aller nachfolgenden Blöcke geändert werden. Damit ist ein Eintrag in der Blockchain, sobald die Transaktion an allen Knotenpunkten veröffentlicht ist, unveränderbar. Im nächsten Schritt (Schritt 4) kann die Datenhaltung mithilfe der verteilten Blockchain-Datenbank auf Manipulation geprüft werden. Hierzu wird für einen Datensatz einer Datenhaltung DB1, ..., DBN oder ZDB, die letzte zugehörige Transaktion mit der Id und dem Hashwert des Datensatzes H(Ch) in der Blockchain-Datenbank gesucht. Der Hashwert aus der Blockchain kann nun mit einem mittels der bekannten Hashfunktion neu generierten Hashwert des zu validierenden Datensatzes verglichen werden. Falls Unterschiede bei den Datensätzen festgestellt werden, ist dies ein sicherer Hinweis darauf, dass eine Manipulation des Datensatzes stattgefunden hat. Diese Überprüfung kann nun für weitere Datensätze einer Datenbank einer technischen Anlage durchgeführt werden. In Schritt 5 wird beispielsweise im Rahmen einer Applikation das Ergebnis der Überprüfung angezeigt und ausgegeben. Die Integritätsprüfung kann an jedem Knotenpunkt BC der Blockchain-Datenbank erfolgen. Denkbar ist ebenfalls ein Cloud-Service (CS in Fig. 1), der in Verbindung mit einer zentralen Datenbank ZDB eines Unternehmens erfolgt und die Datenintegritätsüberprüfung ausführt.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

## Patentansprüche

1. Verfahren zur Integritätsprüfung von Daten zumindest einer technischen Anlage (A1, ..., AN), die in zumindest einer Datenbank (DB1) der zumindest einen technischen Anlage (A1, ..., AN) abgespeichert sind,
wobei
- ein Datensatz (Ch) gebildet wird, der Daten zumindest einer technischen Anlage (A1, ..., AN) enthält,
- dem Datensatz (Ch) mindestens ein Identifikationsmerkmal (Id) zugeordnet wird,
- ein Hashwert (H(Ch)) über den Datensatz (Ch) gebildet wird,
- der Hashwert (H(Ch)) und das Identifikationsmerkmal (Id) in eine verteilte Datenbank (BC) übertragen werden, welche gemäß dem Blockchain-Prinzip ausgeführt ist, und in dieser (BC) in einer Transaktion (T) abgespeichert und durch ein Blockchain-Protokoll an alle Knoten der verteilten Datenbank (BC) verteilt wird, und
- die Integrität der Daten zumindest einer technischen Anlage (A1, ..., AN) geprüft wird, indem für ein Identifikationsmerkmal (Id) der Hashwert (H(Ch)) eines Datensatzes (Ch) aus einer Datenbank (DB1) der technischen Anlage (A1) mit dem Hashwert (H(Ch)) aus der verteilten Datenbank (BC) verglichen wird.

2. Verfahren nach Anspruch 1,
wobei die Integrität der Daten von zumindest einer technischen Anlage (A1, ..., AN) in einem Server eines zentralen Netzwerks außerhalb der zumindest einen technischen Anlage (A1, ..., AN) gemäß Anspruch 1 überprüft wird, nachdem inhaltliche Kopien von zumindest Teilen der Datenbanken (DB1, ..., DBN) der mindestens einen technischen Anlage (A1, ..., AN) zu einer zentralen Datenbank (ZDB) des zentralen Netzwerks übertragen wurden.

3. Verfahren nach Anspruch 2,
wobei die zentrale Datenbank (ZDB) Teil einer Cloud-Plattform ist.

4. Verfahren nach einem der vorhergehenden Ansprüche,
wobei es sich bei der technischen Anlage um eine Anlage der Prozessindustrie oder der Produktionsindustrie handelt und es sich bei den Datensätzen um Prozessdaten oder Produktionsdaten handelt.

5. Verfahren nach einem der vorhergehenden Ansprüche, wobei die Prozesswerte oder Produktionsdaten mit Metadaten verknüpft sind.

6. Verfahren nach einem der vorhergehenden Ansprüche,
wobei die Integrität der Daten in einer Applikation angezeigt wird.

7. Computerprogrammprodukt, welches auf einer programmgesteuerten Einrichtung die Durchführung des Verfahrens nach einem der Ansprüche 1 bis 6 veranlasst.

8. Leitsystem für eine technische Anlage, welches ausgebildet ist, ein Verfahren gemäß einem der Ansprüche 1 bis 6 durchzuführen und mit einer verteilten Datenbank (BC), welche gemäß dem Blockchain-Prinzip ausgeführt ist, verbindbar ist.

9. Leitsystem nach Anspruch 8, welches ferner mit einer Cloud-Plattform (C) verbindbar ist.

10. Technische Anlage, umfassend Mittel zur Ausführung eines Verfahrens gemäß einem der Ansprüche 1 bis 6.

11. Cloud-Plattform, welche eine zentrale Datenbank (ZDB) umfasst, und mit einer verteilten Datenbank (BC) verbindbar ist, und derart ausgelegt ist, ein Verfahren zur Integritätsprüfung von Daten zumindest einer technischen Anlage (A1, ..., AN) gemäß einem der Ansprüche 1 bis 6 durchzuführen.
